# EUROPEAN PATENT APPLICATION

(11) **EP 4 485 648 A1**
(43) Date of publication of application: **01.01.2025**
(21) Application number: 24169384.5
(22) Date of filing: 10.04.2024
(51) Int. Cl.: H01M 50/204, H01M 50/224, H01M 50/251, H01M 50/383, A62C 3/16

(54) **ENERGY STORAGE SYSTEM**

(30) Priority: 30.06.2023 KR 20230084877
(71) Applicant: Samsung SDI Co., Ltd., Yongin-si, Gyeonggi-do 17084 (KR)
(72) Inventor: Kim, Dae Su, 16678 Suwon-si, Gyeonggi-do (KR)
(74) Representative: Gulde & Partner

(57) **Abstract**

Disclosed is an energy storage system, and a problem to be solved is to provide an energy storage system capable of holding a fire extinguishing pipe in position. To this end, disclosed in an example embodiment includes: a rack frame accommodating battery modules; a sub-frame secured to the rack frame and facing the battery module; a guide rail concavely formed on one surface of the sub-frame; a fire extinguishing pipe disposed within the guide rail and having a spray hole through which a fire extinguishing liquid is sprayed; a heat detection member disposed to surround the fire extinguishing pipe and opening or closing the spray hole in conjunction with temperature variation; and a first anti-detachment member disposed between the guide rail and the heat detection member and preventing the fire extinguishing pipe from being detached from the guide rail.

## Description

### Field of the Invention

The present disclosure relates to an energy storage system.

### Description of the Related Art

In general, an energy storage system is a device capable of storing surplus electricity or electricity generated using renewable energy. A plurality of racks each accommodating a plurality of battery modules therein may be received in a container. The battery module may include a plurality of secondary batteries electrically interconnected to each other and arranged in various structures.

The energy storage system may be provided with a direct spray system for spraying a fire-extinguishing liquid directly onto the battery modules in the event of a fire. Such a direct spray system may be implemented by placing a fire extinguishing pipe capable of spraying the fire-extinguishing liquid onto the battery modules. However, if the fire extinguishing pipe is rotated or detached from a correct position, the fire-extinguishing liquid can be sprayed in a direction different from a preset spray direction, thereby making it difficult to quickly extinguish the fire and causing damage to the fire extinguishing pipe due to interference with the battery modules.

### Summary of the Invention

Embodiments of the present disclosure provide an energy storage system capable of holding a fire extinguishing pipe in position. These and other aspects and features of the present disclosure will be described in or will be apparent from the following description of embodiments of the present disclosure.

To solve the above technical problem, according to one or more embodiments of an energy storage system includes: a rack frame accommodating battery modules; a sub-frame secured to the rack frame and facing the battery module; a guide rail concavely formed on one surface of the sub-frame; a fire extinguishing pipe disposed within the guide rail and having a spray hole through which a fire extinguishing liquid is sprayed; a heat detection member disposed to surround the fire extinguishing pipe and opening or closing the spray hole in conjunction with temperature variation; and a first anti-detachment member disposed between the guide rail and the heat detection member and preventing the fire extinguishing pipe from being detached from the guide rail. In other words, the first anti-detachment member is disposed between the guide rail and the heat detection member and the first anti-detachment member is configured to prevent the fire extinguishing pipe from being detached from the guide rail.

The first anti-detachment member may include a slit formed through the guide rail; and a stopper protruding from the heat detection member towards the slit and inserted into the slit.

The stopper may have a smaller width than the slit.

The slit may be composed of a plurality of slits symmetrically disposed at both sides of the guide rail and the stopper may be composed of a plurality of stoppers symmetrically disposed at both sides of the heat detection member.

The fire extinguishing pipe may be inserted into the guide rail through an open surface formed on the guide rail in a first direction and the slit may include a first slit extending in the first direction; and a second slit connected to the first slit and extending in a direction intersecting the first direction.

The first slit may include: a first end connected to the second slit; and a second end placed at an opposite side of the first end and penetrating the sub-frame.

The second slit may extend in a longitudinal direction of the guide rail.

The first anti-detachment member may include: a groove concavely formed on an outer surface of the heat detection member; and a stopper protruding from the guide rail and inserted into the groove.

The groove may be composed of a plurality of grooves symmetrically disposed at both sides of the heat detection member and the stopper may be composed of a plurality of stoppers symmetrically disposed at both sides of the guide rail.

The stopper may have a smaller width than the groove.

The groove may extend in a longitudinal direction of the heat detection member.

The energy storage system may further include: a second anti-detachment member disposed outside the guide rail to face the heat detection member.

The first anti-detachment member may be spaced apart from the second anti-detachment member in a longitudinal direction of the guide rail.

The second anti-detachment member may be composed of a plurality of second anti-detachment members disposed at both sides of the guide rail.

The fire extinguishing pipe may be inserted into the guide rail through an open surface formed on the guide rail in a first direction, and the open surface may face the second anti-detachment member in the first direction.

In the energy storage system according to the present disclosure, the first anti-detachment member restricts rotation of the fire extinguishing pipe about a central axis thereof within the guide rail, thereby preventing change of a spray direction of the spray hole while securing reliability in fire suppression performance.

In the energy storage system according to the present disclosure, the first anti-detachment member prevents the fire extinguishing pipe from being detached from the guide rail, thereby preventing damage to the fire extinguishing pipe due to interference with the battery module mounted on the sub-frame.

In the energy storage system according to the present disclosure, the optional second anti-detachment member may further prevent the fire extinguishing pipe from being detached from the guide rail when the first anti-detachment member loses an inherent function thereof due to damage to the stopper.

### Brief Description of the Drawings

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a schematic perspective view of an energy storage system according to a first embodiment of the present disclosure.
FIG. 2 is a schematic perspective view of a sub-frame and a guide rail according to the first embodiment of the present disclosure.
FIG. 3 is another schematic perspective view of the sub-frame and the guide rail according to the first embodiment of the present disclosure.
FIG. 4 is a schematic perspective view of a fire extinguishing pipe and a heat detection member according to the first embodiment of the present disclosure.
FIG. 5 is another schematic perspective view of the fire extinguishing pipe and the heat detection member according to the first embodiment of the present disclosure.
FIG. 6 is a schematic perspective view of a first anti-detachment member according to the first embodiment of the present disclosure.
FIG. 7 is a schematic exploded perspective view of the first anti-detachment member according to the first embodiment of the present disclosure.
FIG. 8 is a schematic plan view of the first anti-detachment member according to the first embodiment of the present disclosure.
FIG. 9 is a schematic front view of the first anti-detachment member according to the first embodiment of the present disclosure.
FIG. 10 to FIG. 12 are schematic views illustrating a process of assembling the fire extinguishing pipe to the guide rail in the energy storage system according to the first embodiment of the present disclosure.
FIG. 13 is a view illustrating a state in which external force is applied to the fire extinguishing pipe in FIG. 12.
FIG. 14 is a schematic exploded perspective view of a first anti-detachment member according to a second embodiment of the present disclosure.
FIG. 15 is a schematic plan view of the first anti-detachment member according to the second embodiment of the present disclosure.
FIG. 16 to FIG. 18 are schematic views illustrating a process of assembling the fire extinguishing pipe to the guide rail in the energy storage system according to the second embodiment of the present disclosure.
FIG. 19 is a view illustrating a state in which external force is applied to the fire extinguishing pipe in FIG. 18.

### Detailed Description of the Invention

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

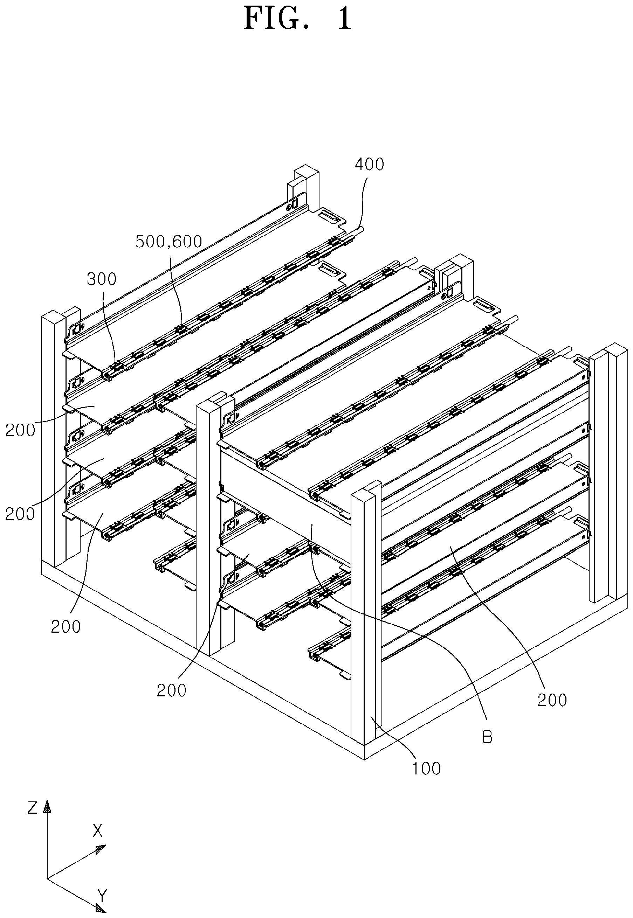

FIG. 1 is a schematic perspective view of an energy storage system according to a first embodiment of the present disclosure.

Referring to FIG. 1, the energy storage system according to this embodiment includes a rack frame 100, a sub-frame 200, a guide rail 300, a fire extinguishing pipe 400, a heat detection member 500, and a first anti-detachment member 600.

The rack frame 100 is provided therein with a space capable of accommodating battery modules B. According to this embodiment, the rack frame 100 may have a hollow box or frame shape. The rack frame 100 may be disposed in a building, a container, a cabinet, or the like. The rack frame 100 may be formed of a material with high stiffness, such as steel and the like, to prevent breakage due to a load applied from the battery modules B. Although FIG. 1 shows the rack frame 100 having a parallelepiped shape, it should be understood that the rack frame 100 may be modified into various shapes including a polyhedral shape, a cylindrical shape, and the like.

The battery module B stores power through charge/discharge operation, or supplies the stored power to an external electronic device (not shown). The battery module B may include a substantially box-shaped module case, a plurality of battery cells disposed within the module case, and a cooling plate through which coolant flows to cool the battery cells. The battery cells may be pouch-type secondary cells, prismatic secondary cells, or cylindrical secondary cells.

The battery module B may be provided in plural. A plurality of battery modules B may be stacked within the rack frame 100 in a vertical direction. That is, the plurality of battery modules B may be spaced apart from each other in the Z-axis direction with reference to FIG. 1. Further, the plurality of battery modules B may be arranged in plural rows in a horizontal direction. That is, the plurality of battery modules B may be arranged in plural rows in the Y-axis direction with reference to FIG. 1.

The sub-frame 200 is secured to the rack frame 100 and is disposed to face the battery module B. The sub-frame 200 may act to support the battery module B and the fire extinguishing pipe 400, described later, within the rack frame 100.

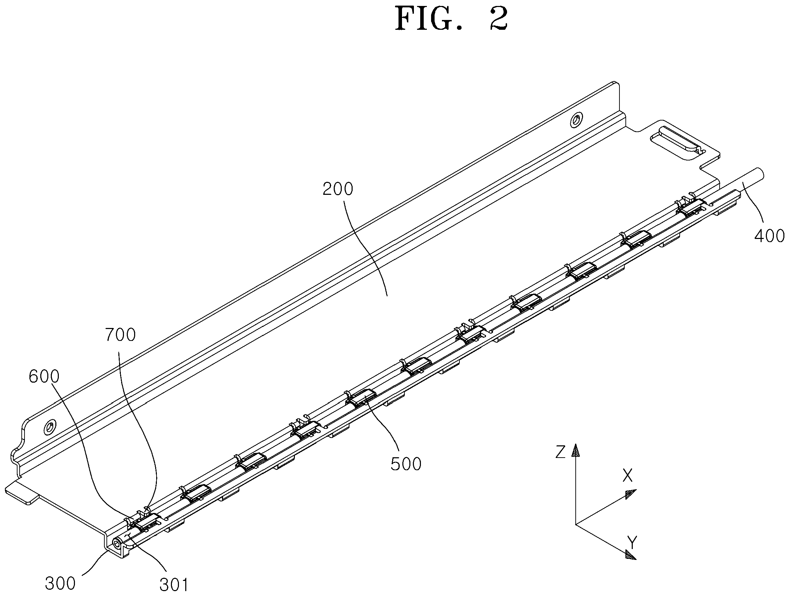

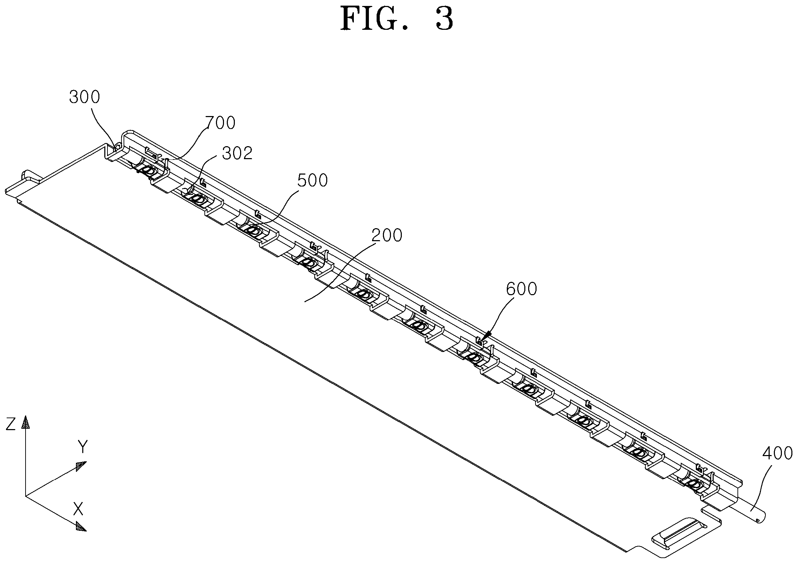

FIG. 2 is a schematic perspective view of the sub-frame and the guide rail according to the first embodiment of the present disclosure and FIG. 3 is another schematic perspective view of the sub-frame and the guide rail according to the first embodiment of the present disclosure.

Referring to FIG. 1 to FIG. 3, the sub-frame 200 according to this embodiment may have a substantially plate shape. The sub-frame 200 may be provided in plural. Each of a plurality of sub-frames 200 may be disposed between a pair of battery modules B spaced apart in the vertical direction. With reference to any one battery module B, the plurality of sub-frames 200 may be symmetrically disposed at both sides of the battery module B in a width direction thereof. Here, the width direction of the battery module B may mean a direction parallel to the Y-axis with reference to FIG. 1.

A lower surface of the sub-frame 200 disposed between the pair of battery modules B adjacent each other in the vertical direction may be spaced apart from an upper surface of a battery module B disposed at a lower side. In addition, an upper surface of the sub-frame 200 disposed between the pair of battery modules B adjacent each other in the vertical direction may contact a lower surface of the battery module B disposed at an upper side. Accordingly, each of the battery modules B may be supported within the rack frame 100, with the lower surface thereof seated on the sub-frame 200, and may secure a space on the upper surface thereof, to which a fire extinguishing liquid sprayed from the fire extinguishing pipe 400 described below can be delivered.

The guide rail 300 provides a space on the sub-frame 200, in which the fire extinguishing pipe 400 can be accommodated. The guide rail 300 according to this embodiment may be concavely formed on the upper surface of the sub-frame 200. The guide rail 300 may be disposed to have a longitudinal direction parallel to a longitudinal direction of the battery module B. Here, the longitudinal direction of the battery module B may refer to a direction parallel to the X-axis direction with reference to FIG. 1.

The guide rail 300 may be formed on an upper surface thereof with an open surface 301 through which an interior space of the guide rail 300 connects with an exterior space thereof. Accordingly, the guide rail 300 may have a cross-section enclosed by a pair of side surfaces, a bottom surface, and the open surface 301. Although FIG. 2 illustrates the guide rail 300 having a substantially rectangular cross-section, it should be understood that the guide rail 300 is not limited thereto and may be modified to various shapes including a trapezoidal shape, a triangular shape, a semi-circular shape, and the like.

A lower surface of the guide rail 300 may be separated a predetermined distance from the upper surface of the battery module B to face the upper surface of the battery module B. The guide rail 300 may be formed on the lower surface thereof with a plurality of through-holes 302. The through-holes 302 may be vertically formed through the lower surface of the guide rail 300. Each of the through-holes 302 may be disposed at a position facing a vent hole (not shown) of each of battery cells in the battery module B.

The fire extinguishing pipe 400 is disposed within the guide rail 300 and delivers a fire extinguishing liquid.

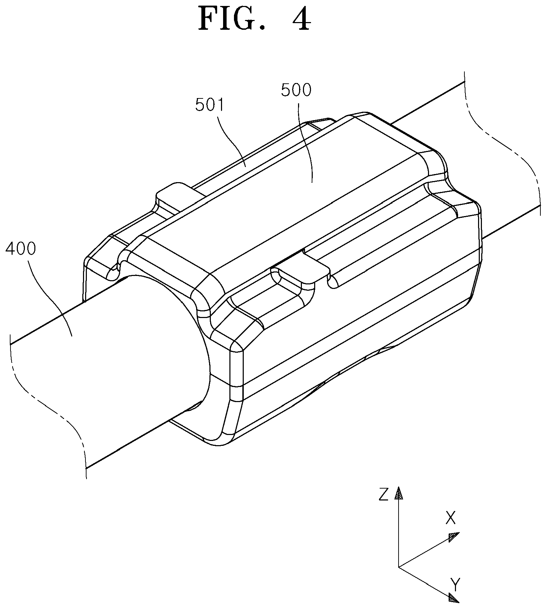

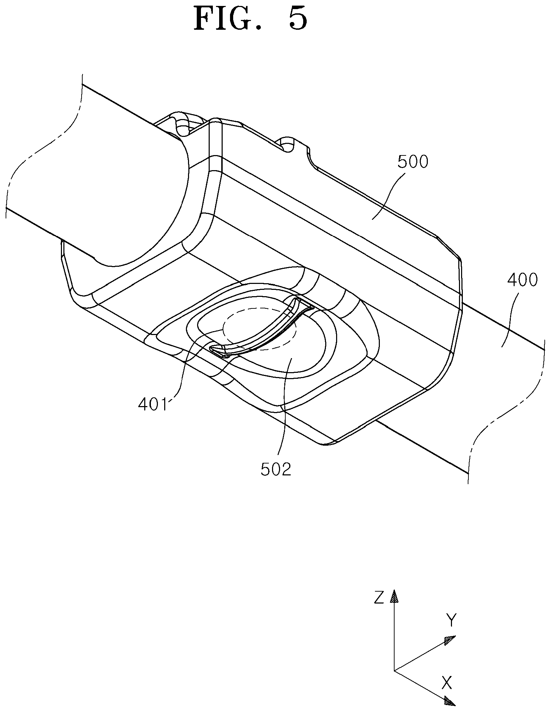

FIG. 4 is a schematic perspective view of the fire extinguishing pipe and the heat detection member according to the first embodiment of the present disclosure and FIG. 5 is another schematic perspective view of the fire extinguishing pipe and the heat detection member according to the first embodiment of the present disclosure.

Referring to FIG. 1 to FIG. 5, the fire extinguishing pipe 400 according to this embodiment may have a hollow tube shape. The fire extinguishing pipe 400 may receive a fire extinguishing liquid supplied from the outside of the rack frame 100 via a separate hose, piping, or the like. Although FIG. 2 to FIG. 5 show the fire extinguishing pipe 400 having a circular cross-sectional shape, it should be understood that the fire extinguishing pipe 400 may have various cross-sectional shapes.

The fire extinguishing pipe 400 may be disposed to have a longitudinal direction parallel to the longitudinal direction of the guide rail 300. The fire extinguishing pipe 400 may have a smaller cross-sectional area than the guide rail 300. The fire extinguishing pipe 400 may be inserted from the outside of the sub-frame 200 into the guide rail 300 through the open surface 301 in a first direction. Here, the first direction may refer to a direction parallel to the Z-axis among directions from the open surface 301 toward the interior of the guide rail 300. The fire extinguishing pipe 400 may be slidably moved in the longitudinal direction of the guide rail 300 in a state of being inserted into the guide rail 300.

The fire extinguishing pipe 400 may be provided in plural. A plurality of fire extinguishing pipes 400 may be disposed inside the guide rails 300, respectively.

The fire extinguishing pipe 400 may be formed with a spray hole 401 through which the fire extinguishing liquid is sprayed from the fire extinguishing pipe 400 to the outside of the fire extinguishing pipe 400. The spray hole 401 may be provided in plural. A plurality of spray holes 401 may be spaced apart from each other in the longitudinal direction of the fire extinguishing pipe 400. As the fire extinguishing pipe 400 is inserted into the guide rail 300, the spray holes 401 may be arranged to face the through holes 302, respectively.

The heat detection member 500 is disposed to surround the fire extinguishing pipe 400 and opens or closes the spray holes 401 in conjunction with temperature variation.

According to this embodiment, the heat detection member 500 may be formed to surround the entire circumferential surface of the fire extinguishing pipe 400. A cross-sectional shape of the heat detection member 500 is not limited to the shape shown in FIG. 4 and FIG. 5, and may be modified to various cross-sectional shapes so long as the heat detection member 500 can surround the circumferential surface of the fire extinguishing pipe 400. The heat detection member 500 may have a smaller cross-sectional area than the guide rail 300. Accordingly, the heat detection member 500 may guide the fire extinguishing pipe 400 to be smoothly inserted into the guide rail 300.

The heat detection member 500 may be provided in plural. A plurality of heat detection members 500 may be spaced apart from each other in the longitudinal direction of the fire extinguishing pipe 400. Each of the heat detection members 500 may be disposed to face a different spray hole 401. Accordingly, the heat detection member 500 may restrict the fire extinguishing liquid from being sprayed from the spray holes 401 in a normal temperature range.

When heated to a preset temperature or more, the heat detection member 500 may be melt and open the spray holes 401. Accordingly, in the event of a fire, the heat detection member 500 may open the spray holes 401 to induce the fire extinguishing liquid delivered along the fire extinguishing pipe 400 to be sprayed onto the upper surfaces of the battery modules B through the spray holes 401 and the through-holes 302. By way of example, the heat detection member 500 may be melted in the range of 80 degrees Celsius to 250 degrees Celsius. Here, 80 degrees Celsius may be a temperature at which the heat detection member 500 begins to melt, and 250 degrees Celsius may be a temperature at which the heat detection member 500 is completely melted. The heat detection member 500 may be formed of a resin material, such as ABS, PP, PC, PE, PFA, and the like.

When the fire extinguishing pipe 400 is inserted into the guide rail 300, a flat seating surface 501 may be formed on one surface or an upper surface of the heat detection member 500 that faces the open surface 301. The seating surface 501 may be disposed parallel to the open surface 301 to face the open surface 301. The seating surface 501 may be provided as a pair of seating surfaces. The pair of seating surfaces 501 may be disposed at both sides of the heat detection member 500 in a width direction thereof, respectively.

A thin film 502 may be formed on the other side or a lower surface of the heat detection member 500 that faces the spray hole 401. The thin film 502 may have a smaller thickness than a remaining region of the heat detection member 500. For example, assuming that a region of the heat detection member 500 around the thin film 502 has a thickness of 1 mm, the thin film 502 may have a thickness of 0.3 mm to 0.6 mm or 0.2 mm to 0.9 mm. Accordingly, when heat is applied to the heat detection member 500, the thin film 502 may melt faster than the remaining region of the heat detection member 500 to allow the spray hole 401 to be quickly open.

The first anti-detachment member 600 is disposed between the guide rail 300 and the heat detection member 500 and prevents the fire extinguishing pipe 400 from being detached from the guide rail 300. Further, the first anti-detachment member 600 may restrict the fire extinguishing pipe 400 from rotating about a center axis thereof inside the guide rail 300. The first anti-detachment member 600 may be configured as a two-part latching member. Preferably, the first anti-detachment member 600 may be configured as a plurality of a two-part latching member. The two-part latching member may consist of a stopper 620, 640 and a retainer, as for instance a slit 610 or a groove 630, configured to interlock the stopper. The first anti-detachment member 600 being disposed between the guide rail 300 and the heat detection member 500, may be understood in terms of one part of the two-part latching member being part of the guide rail 300 and the other part of the two-part latching member being part of the heat detection member 500. Accordingly, the first anti-detachment member 600 can prevent the fire extinguishing pipe 400 from deviating from a correct position and changing a spray direction of the spray hole 401, and can prevent damage to the fire extinguishing pipe 400 through interference with the battery module B.

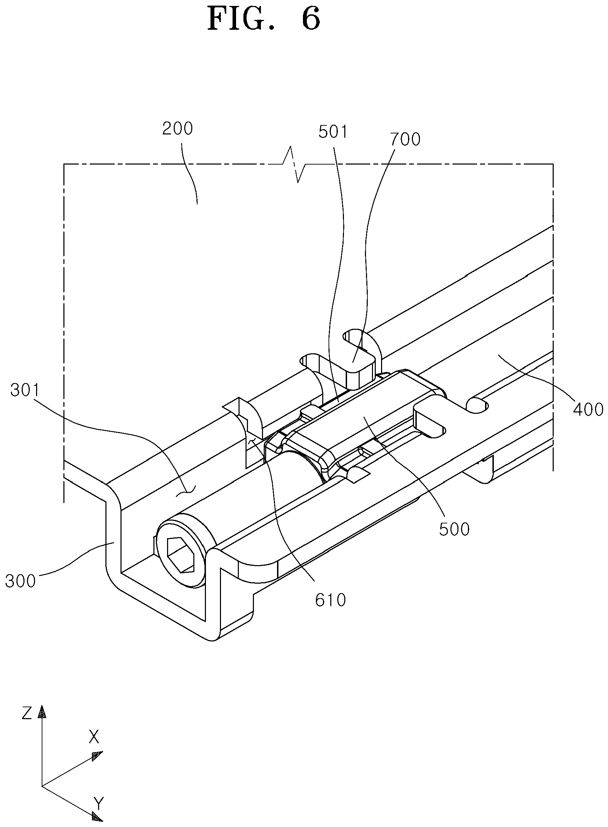

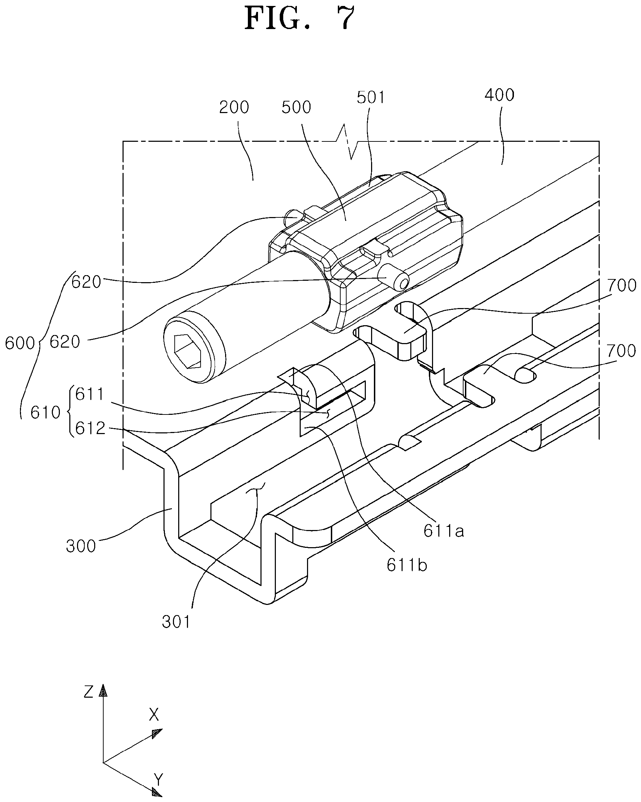

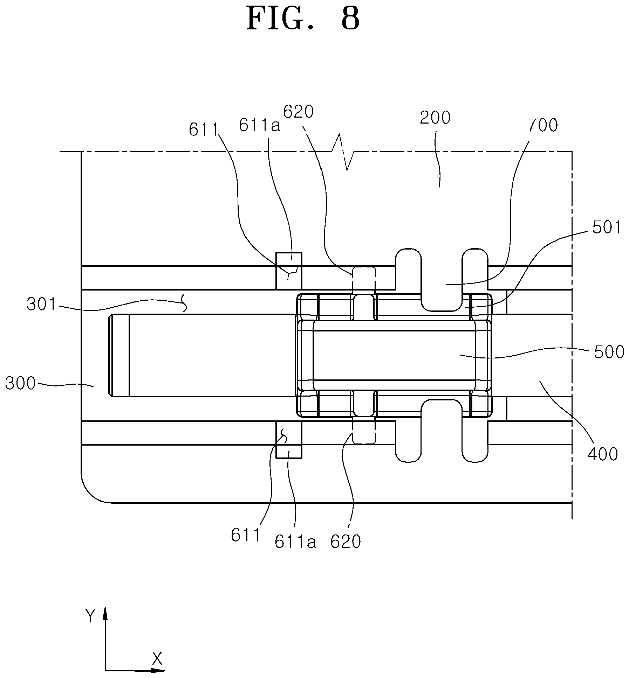

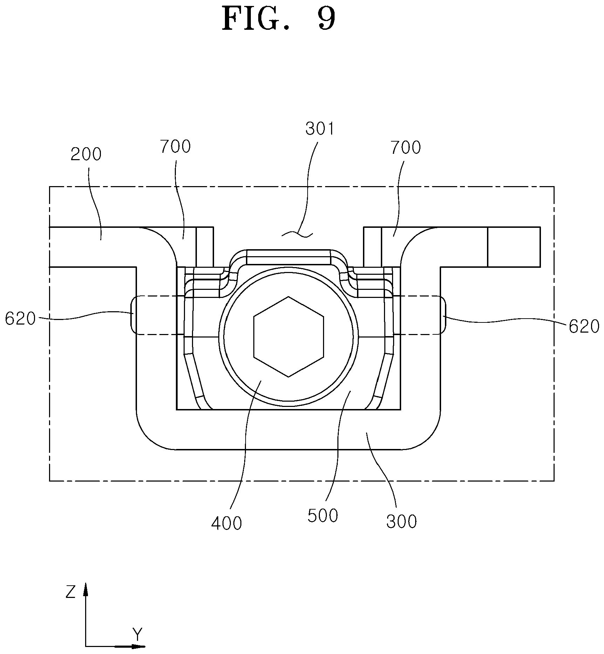

FIG. 6 is a schematic perspective view of the first anti-detachment member according to the first embodiment of the present disclosure, FIG. 7 is a schematic exploded perspective view of the first anti-detachment member according to the first embodiment of the present disclosure, FIG. 8 is a schematic plan view of the first anti-detachment member according to the first embodiment of the present disclosure, and FIG. 9 is a schematic front view of the first anti-detachment member according to the first embodiment of the present disclosure.

Referring to FIG. 6 to FIG. 9, the first anti-detachment member 600 according to this embodiment may include a slit 610 and a stopper 620.

The slit 610 is formed through the guide rail 300. The slit 610 may be provided in plural. A plurality of slits 610 may be symmetrically disposed at both sides of the guide rail 300 in a width direction thereof. The plurality of slits 610 may be arranged in plural rows in the longitudinal direction of the guide rail 300.

According to this embodiment, the slit 610 may include a first slit 611 and a second slit 612.

The first slit 611 may form an appearance of one side of the slit 610 and may extend in the first direction. According to this embodiment, the first slit 611 may penetrate a side surface of the guide rail 300 in the width direction of the guide rail 300, that is, in a direction parallel to the Y-axis with reference to FIG. 7. The first slit 611 may be disposed to have a longitudinal direction parallel to the first direction, that is, the Z-axis with reference to FIG. 7.

The first slit 611 may include a first end 611b connected to the second slit 612 described below and a second end 611a placed at an opposite side of the first end 611b.

The first end 611b and the second end 611a may be spaced apart from each other in a longitudinal direction of the first slit 611. The first end 611b may be disposed on a side surface of the guide rail 300 and may penetrate the side surface of the guide rail 300 in the Y-axis direction. The second end 611a may be placed on the sub-frame 200 and may penetrate the upper surface of the sub-frame 200 in the Z-axis direction. That is, the first slit 611 may extend such that a zone between the first end 611b and the second end 611a intersects a boundary region between the sub-frame 200 and the guide rail 300. Accordingly, the stopper 620 may enter the first slit 611 in the first direction through the second end 611a.

The second slit 612 may be connected to the first slit 611 and extend in a direction intersecting the first direction. According to this embodiment, the second slit 612 may penetrate the side surface of the guide rail 300 in the width direction of the guide rail 300, that is, in a direction parallel to the Y-axis. The second slit 612 may be disposed to have a longitudinal direction intersecting the first direction, that is, the longitudinal direction of the first slit 611. By way of example, the second slit 612 may be disposed such that the longitudinal direction of the second slit 612 is parallel to the longitudinal direction of the guide rail 300, as shown in FIG. 7. The second slit 612 may be connected at one end thereof to the first end 611b of the first slit 611.

The second slit 612 may have a smaller width than the first slit 611. Accordingly, the second slit 612 may further reduce a rotatable extent of the fire extinguishing pipe 400 about the central axis thereof.

The stopper 620 protrudes from the heat detection member 500 toward the slit 610 and is inserted into the slit 610. According to this embodiment, the stopper 620 may have a columnar shape protruding from an outer surface of the heat detection member 500. Although FIG. 7 shows the stopper having a circular cross-section, it should be understood that the cross-sectional shape of the stopper 620 may be modified into various shapes.

The stopper 620 may protrude from the heat detection member 500 in a direction intersecting the first direction. For example, the stopper 620 may be disposed to have a longitudinal direction parallel to a width direction of the stopper 500, that is, the Y-axis direction. A width of the stopper 620 may be smaller than the width of the slit 610, more specifically, the width of the first slit 611 and the second slit 612. Accordingly, the stopper 620 may be inserted into the slit 610 when the fire extinguishing pipe 400 is inserted into the guide rail 300.

The stopper 620 may be provided in plural. A plurality of stoppers 620 may be symmetrically disposed at both sides of the heat detection member 500 in the width direction thereof. For example, as shown in FIG. 7, the stoppers 620 may be formed as a pair of stoppers, which may protrude in different directions from both sides of the heat detection member 500 in the width direction thereof. In this case, the stoppers 620 may be inserted into a pair of slits 610 disposed at both sides of the guide rail 300, respectively.

The energy storage system according to this embodiment may further include a second anti-detachment member 700.

The second anti-detachment member 700 is disposed outside the guide rail 300 to face the heat detection member 500. The second anti-detachment member 700 may serve to secondarily prevent the fire extinguishing pipe 400 from being detached from the guide rail 300 when the function of the first anti-detachment member 600 is lost due to breakage of the stopper 620 and the like.

According to this embodiment, the second anti-detachment member 700 may be connected at one end thereof to the sub-frame 200. The other end of the second anti-detachment member 700 may extend from the sub-frame 200 in the direction intersecting the first direction. By way of example, the second anti-detachment member 700 may extend from the sub-frame 200 in a direction parallel to the width direction of the guide rail 300.

The second anti-detachment member 700 may be disposed outside the guide rail 300 to face the open surface 301 in the first direction. That is, the second anti-detachment member 700 may be disposed to face the open surface 301 up and down. The second anti-detachment member 700 may be separated a predetermined distance from the open surface 301. When the fire extinguishing pipe 400 is inserted into the guide rail 300, the second anti-detachment member 700 may be disposed to face the seating surface 501 of the heat detection member 500. The second anti-detachment member 700 may contact the seating surface 501 to prevent detachment of the fire extinguishing pipe 400 when the fire extinguishing pipe 400 is detached from the guide rail 300 in a direction opposite to the first direction by external force.

The second anti-detachment member 700 may be provided in plural. A plurality of second anti-detachment members 700 may be symmetrically disposed at both sides of the guide rail 300. Further, the plurality of second anti-detachment members 700 may be arranged in plural rows in the longitudinal direction of the guide rail 300. The second anti-detachment members 700 may be spaced apart from the first anti-detachment member 600 in the longitudinal direction of the guide rail 300. When the stopper 620 is inserted into the first slit 611 in the first direction, the second anti-detachment member 700 may be disposed so as not to contact the fire extinguishing pipe 400 and the heat detection member 500.

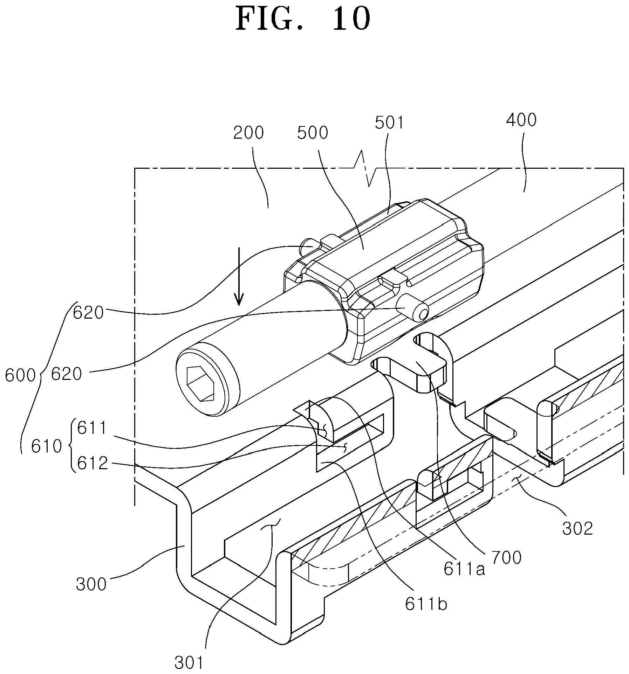

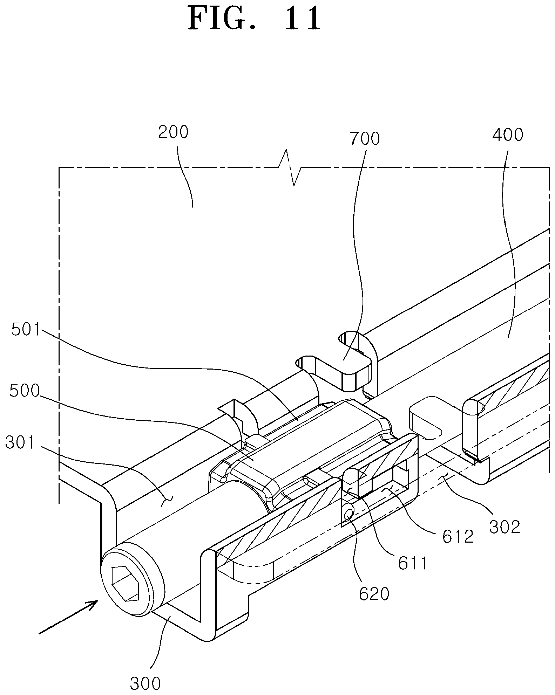

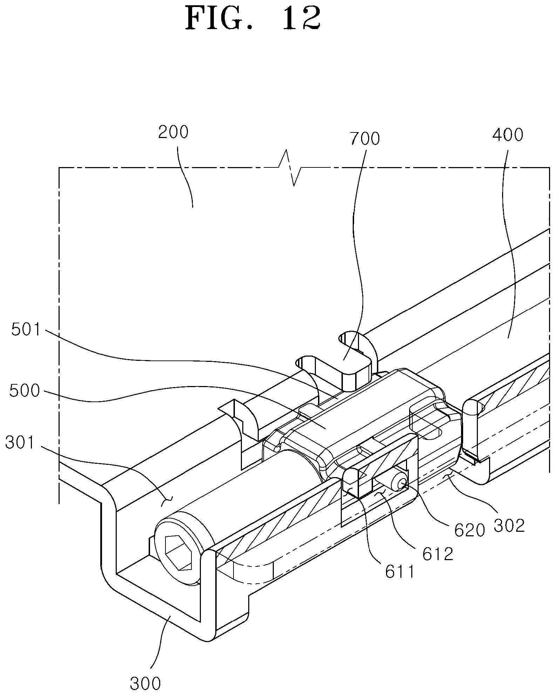

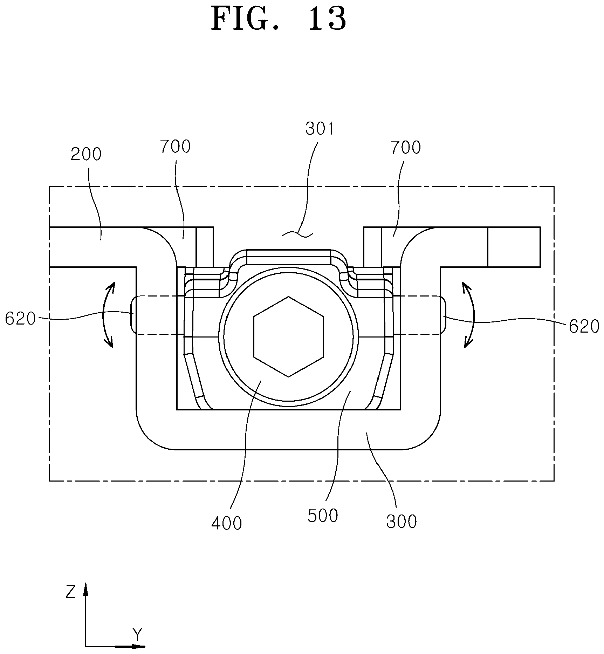

FIG. 10 to FIG. 12 are schematic views illustrating a process of assembling the fire extinguishing pipe to the guide rail in the energy storage system according to the first embodiment of the present disclosure, and FIG. 13 is a view illustrating a state in which external force is applied to the fire extinguishing pipe in FIG. 12.

Referring to FIG. 10 to FIG. 12, the fire extinguishing pipe 400 is moved in the first direction while being disposed to face the open side 301 of the guide rail 300. In this case, the stopper 620 and the second end 611a of the slit 610 may be kept facing each other in the first direction.

As the fire extinguishing pipe 400 is moved a preset distance or more in the first direction, the stopper 620 enters the first slit 611 through the second end 611a.

Thereafter, the stopper 620 is moved toward the first end 611b in the longitudinal direction of the first slit 611 and is placed at the first end 611b as the fire extinguishing pipe 400 is fully inserted into the guide rail 300.

Thereafter, the fire extinguishing pipe 400 is slidably moved in the longitudinal direction of the guide rail 300 and the stopper 620 enters the second slit 612 through the first end 611b.

As the stopper 620 contacts an end of the second slit 612, movement of the fire extinguishing pipe 400 is stopped.

Referring to FIG. 13, when rotational force or torsional load is applied to the fire extinguishing pipe 400 with the stopper 620 inserted into the second slit 612, the stopper 620 contacts an inner surface of the second slit 612.

The rotational force applied to the fire extinguishing pipe 400 is offset by reaction force between the stopper 620 and the inner surface of the second slit 612, and the fire extinguishing pipe 400 can maintain its initial angle without rotating about the central axis thereof.

Further, when external force is applied to the fire extinguishing pipe 400 in a direction opposite to the first direction with the stopper 620 inserted into the second slit 612, the stopper 620 contacts the inner surface of the second slit 612.

The external force applied to the fire extinguishing pipe 400 is offset by reaction force between the stopper 620 and the inner surface of the second slit 612, and the fire extinguishing pipe 400 can maintain its initial position without moving in the direction opposite to the first direction

When the fire extinguishing pipe 400 is moved in the direction opposite to the first direction due to breakage of the stopper 620, the second anti-detachment member 700 may contact the seating surface of the heat detection member 500 to secondarily prevent detachment of the fire extinguishing pipe 400 from the guide rail 300.

Hereinafter, an energy storage system according to a second embodiment of the present disclosure will be described.

The energy storage system according to the second embodiment of the present disclosure may include a rack frame 100, a sub-frame 200, a guide rail 300, a fire extinguishing pipe 400, a heat detection member 500, a first anti-detachment member 600, and a second anti-detachment member 700.

The energy storage system according to the second embodiment may differ from the energy storage system according to the first embodiment only in a detailed configuration of the first anti-detachment member 600.

Accordingly, the following description will focus on the detailed configuration of the first anti-detachment member 600, which is not described above in the energy storage system according to the first embodiment of the present disclosure.

For the remaining configurations of the energy storage system according to the second embodiment of the present disclosure, refer to the description of the energy storage system according to the first embodiment of the present disclosure.

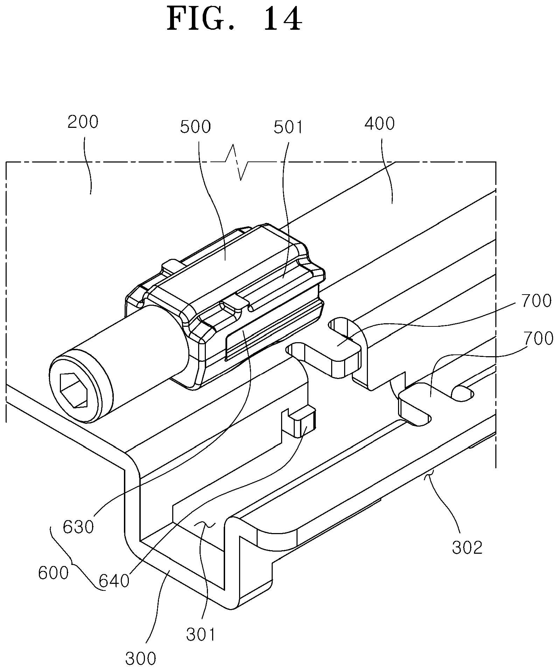

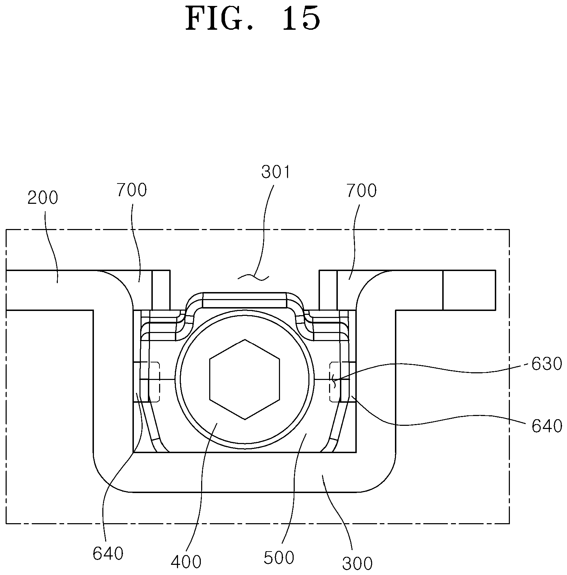

FIG. 14 is a schematic exploded perspective view of the first anti-detachment member according to the second embodiment of the present disclosure and FIG. 15 is a schematic plan view of the first anti-detachment member according to the second embodiment of the present disclosure

Referring to FIG. 14 and FIG. 15, the first anti-detachment member 600 according to this embodiment may include a groove 630 and a stopper 640.

The groove 630 may be concavely formed on an outer surface of the heat detection member 500. More specifically, the groove 630 may be concavely recessed from a side surface of the heat detection member 500 that faces a side surface of the guide rail 300 in a width direction of the heat detection member 500, that is, in a direction parallel to the Y-axis direction with reference to FIG. 1.

The groove 630 may extend in a longitudinal direction of the heat detection member 500, that is, in a direction parallel to the X-axis direction with reference to FIG. 1. The groove 630 may have a smaller length than the heat detection member 500. In this case, one end of the groove 630 may penetrate one end of the heat detection member 500 in the longitudinal direction thereof. Accordingly, the one end of the groove 630 may be open in the longitudinal direction of the heat detection member 500 and the other end of the groove 630 may be closed in the longitudinal direction thereof.

The groove 630 may be provided in plural. A plurality of grooves 630 may be symmetrically disposed at both sides of the heat detection member 500 in the width direction thereof. For example, as shown in FIG. 14, the grooves 630 may be formed as a pair of grooves and may be recessed from both sides of the heat detection member 500 to face each other in the width direction thereof.

The stopper 640 may protrude from a side surface of the guide rail 300 toward an interior space of the guide rail 300. More specifically, the stopper 640 may protrude from the side surface of the guide rail 300 in the width direction of the guide rail 300, that is, in in a direction parallel to the Y-axis direction with reference to FIG. 1. The stopper 640 may have a smaller width than the groove 630. Accordingly, the stopper 640 may be inserted into the groove 630 when the fire extinguishing pipe 400 is inserted into the guide rail 300.

The stopper 640 may be provided in plural. A plurality of stoppers 640 may be symmetrically disposed at both sides of the guide rail 300 in the width direction thereof. The plurality of stoppers 640 may be arranged in plural rows in the longitudinal direction of the guide rail 300

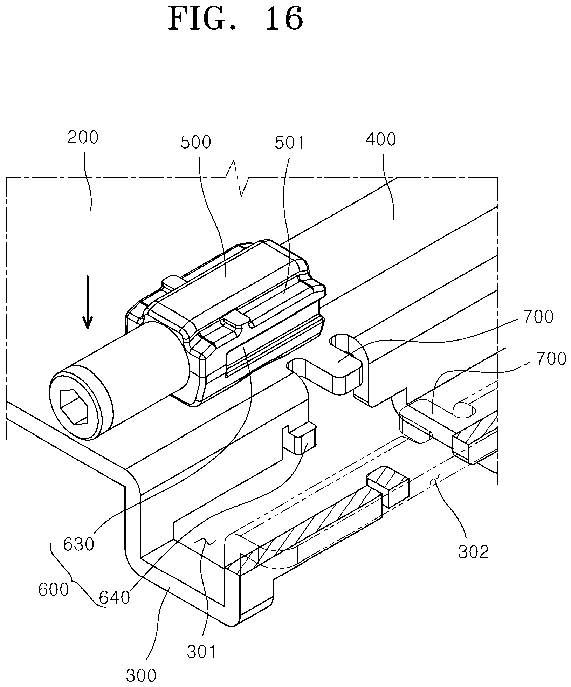

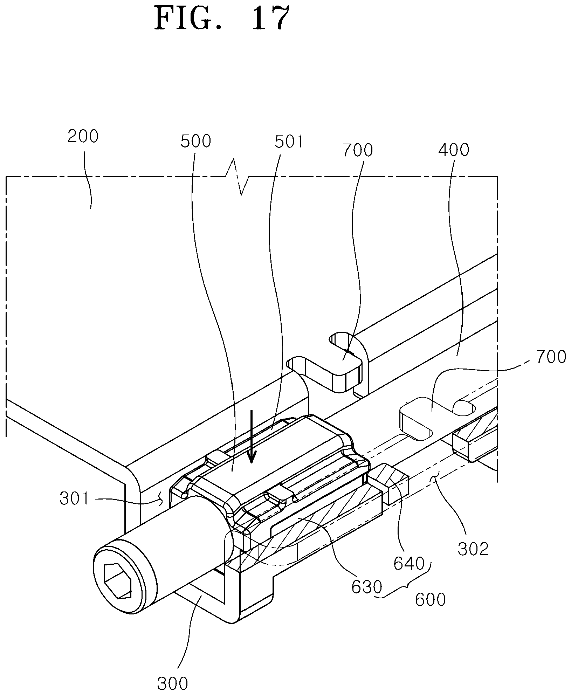

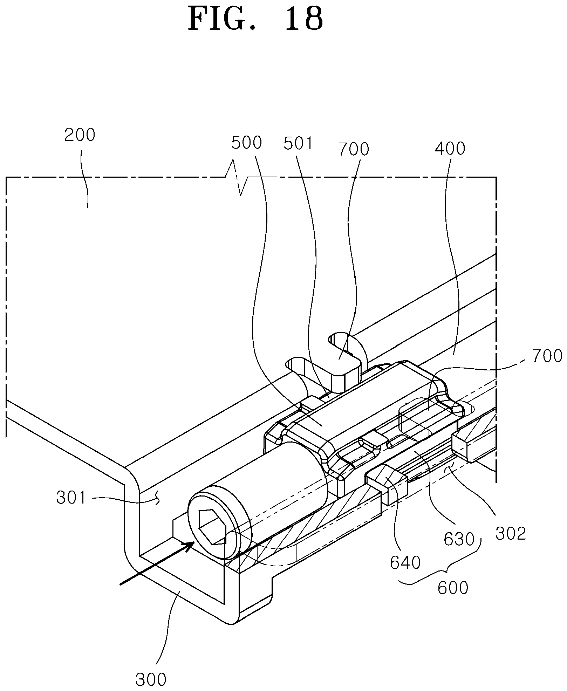

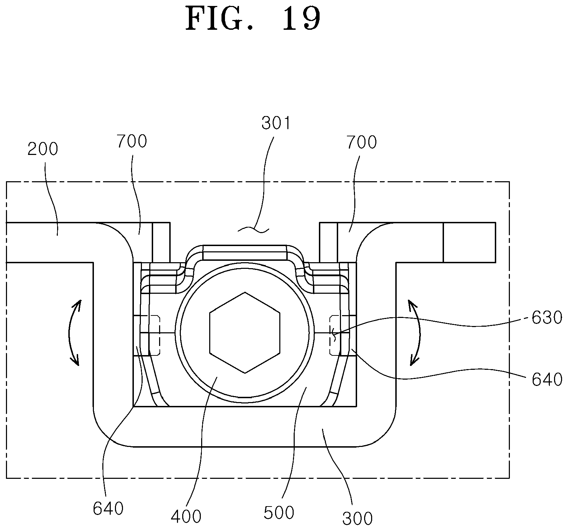

FIG. 16 to FIG. 18 are schematic views illustrating a process of assembling the fire extinguishing pipe to the guide rail in the energy storage system according to the second embodiment of the present disclosure, and FIG. 19 is a view illustrating a state in which external force is applied to the fire extinguishing pipe in FIG. 18.

Referring to FIG. 10 to FIG. 12, the fire extinguishing pipe 400 is moved in the first direction while being disposed to face the open side 301 of the guide rail 300. In this case, one end of the groove 630 and the stopper 640 may be kept alternating with each other in an intersecting direction with respect to the first direction.

As the fire extinguishing pipe 400 is fully inserted into the guide rail 300, the one end of the groove 630 and the stopper 640 are disposed to face each other in the longitudinal direction of the guide rail 300.

Thereafter, the fire extinguishing pipe 400 is slidably moved in the longitudinal direction of the guide rail 300 and the stopper 640 is inserted into the groove 630 through the one end of the groove 630.

As the fire extinguishing pipe 400 is moved a preset distance or more in the longitudinal direction of the guide rail 300, the stopper 640 contacts the other end of the groove 630 and sliding movement of the fire extinguishing pipe 400 is stopped.

Referring to FIG. 19, when rotational force or torsional load is applied to the fire extinguishing pipe 400 with the stopper 640 inserted into the groove 630, the stopper 620 contacts an inner surface of the groove 630.

The rotational force applied to the fire extinguishing pipe 400 is offset by reaction force between the stopper 640 and the inner surface of the groove 630, and the fire extinguishing pipe 400 can maintain its initial angle without rotating about the central axis thereof.

Further, when external force is applied to the fire extinguishing pipe 400 in a direction opposite to the first direction with the stopper 640 inserted into the groove 630, the stopper 640 contacts the inner surface of the groove 630.

The external force applied to the fire extinguishing pipe 400 is offset by reaction force between the stopper 640 and the inner surface of the groove 630, and the fire extinguishing pipe 400 can maintain its initial position without moving in the direction opposite to the first direction.

When the fire extinguishing pipe 400 is moved in the direction opposite to the first direction due to breakage of the stopper 640, the second anti-detachment member 700 may contact the seating surface of the heat detection member 500 to secondarily prevent the fire extinguishing pipe 400 from being detached from the guide rail 300.

Although the present disclosure has been described with reference to some example embodiments, it should be understood by those skilled in the art that these embodiments are given by way of illustration only, and that various modifications, variations and alterations can be made without departing from the scope of the invention.

Therefore, the scope of the invention should be limited only by the claims and equivalents thereto.

## Claims

1. An energy storage system comprising:
a rack frame (100) accommodating battery modules;
a sub-frame (200) secured to the rack frame (100) and facing the battery module;
a guide rail (300) concavely formed on one surface of the sub-frame (200);
a fire extinguishing pipe (400) disposed within the guide rail (300) and having a spray hole (401) through which a fire extinguishing liquid is sprayed;
a heat detection member (500) disposed to surround the fire extinguishing pipe (400) and opening or closing the spray hole (401) in conjunction with temperature variation; and
a first anti-detachment member (600) disposed between the guide rail (300) and the heat detection member (500) and preventing the fire extinguishing pipe (400) from being detached from the guide rail (300).

2. The energy storage system according to claim 1, wherein the first anti-detachment member (600) comprises:
a slit (610) formed through the guide rail (300); and
a stopper (620) protruding from the heat detection member (500) towards the slit (610) and inserted into the slit (610).

3. The energy storage system according to claim 2, wherein the stopper (620) has a smaller width than the slit (610).

4. The energy storage system according to claim 2 or 3, wherein the slit (610) is composed of a plurality of slits (610) symmetrically disposed at both sides of the guide rail (300) and the stopper (620) is composed of a plurality of stoppers (620) symmetrically disposed at both sides of the heat detection member.

5. The energy storage system according to one of claims 2 to 4, wherein:
the fire extinguishing pipe (400) is inserted into the guide rail (300) through an open surface formed on the guide rail (300) in a first direction, and
the slit (610) comprises: a first slit (611) extending in the first direction; and a second slit (612) connected to the first slit (611) and extending in a direction intersecting the first direction.

6. The energy storage system according to claim 5, wherein the first slit (611) comprises: a first end (611b) connected to the second slit (612); and a second end (611a) placed at an opposite side of the first end (611b) and penetrating the sub-frame (200).

7. The energy storage system according to claim 5 or 6, wherein the second slit (612) extends in a longitudinal direction of the guide rail (300).

8. The energy storage system according to claim 1, wherein the first anti-detachment member (600) comprises:
a groove (630) concavely formed on an outer surface of the heat detection member (500); and
a stopper (640) protruding from the guide rail (300) and inserted into the groove (630).

9. The energy storage system according to claim 8, wherein the groove (630) is composed of a plurality of grooves (630) symmetrically disposed at both sides of the heat detection member (500) and the stopper (640) is composed of a plurality of stoppers (640) symmetrically disposed at both sides of the guide rail (300).

10. The energy storage system according to claim 8 or 9, wherein the stopper (640) has a smaller width than the groove (630).

11. The energy storage system according to one of claims 8 to 10, wherein the groove (630) extends in a longitudinal direction of the heat detection member (500).

12. The energy storage system according to one of the preceding claims, further comprising:
a second anti-detachment member (700) disposed outside the guide rail (300) to face the heat detection member (500).

13. The energy storage system according to claim 12, wherein the first anti-detachment member (600) is spaced apart from the second anti-detachment member (700) in a longitudinal direction of the guide rail (300).

14. The energy storage system according to claim 12 or 13, wherein the second anti-detachment member (700) is composed of a plurality of second anti-detachment members (700) symmetrically disposed at the both sides of the guide rail (300).

15. The energy storage system according to one of claims 12 to 14, wherein the fire extinguishing pipe (400) is inserted into the guide rail (300) through an open surface formed on the guide rail (300) in a first direction, and the open surface faces the second anti-detachment member (700) in the first direction.
